# EUROPÄISCHE PATENTSCHRIFT

(11) **EP 0 817 511 B1**
(45) Veröffentlichungstag und Bekanntmachung des Hinweises auf die Patenterteilung: **13.02.2002**
(21) Anmeldenummer: 97401522.4
(22) Anmeldetag: 26.06.1997
(51) Int. Cl.: H04Q 3/545, H04M 3/42, H04Q 3/00

(54) **Verfahren zum Erbringen eines Telekommunikations-Dienstes**
Method for the provision of a telecommunications service
Procédé pour fournir un service de télécommunication

(30) Priorität: 28.06.1996 DE 19626131
(43) Veröffentlichungstag der Anmeldung: 07.01.1998
(73) Patentinhaber: ALCATEL, 75008 Paris (FR)
(72) Erfinder: Lautenschlager, Wolfgang, 71287 Weissach-Flacht (DE); Stahl, Uwe, 71229 Leonberg (DE)
(74) Vertreter: Zinsinger, Norbert

(56) Entgegenhaltungen:
- WO-A-95/08881
- US-A- 5 379 383

## Beschreibung

Die Erfindung betrifft ein Verfahren zum Erbringen eines Telekommunikations-Dienstes nach dem Oberbegriff von Anspruch 1, eine Dienst-Einheit für ein Kommunikationsnetzes nach dem Oberbegriff von Anspruch 10, einen Dienstrechner für ein Kommunikationsnetze nach dem Oberbegriff von Anspruch 13, ein Endgerät zum Anschluß an ein Kommunikationsnetz nach dem Oberbegriff von Anspruch 14 und ein Kommunikationsnetz nach dem Oberbegriff von Anspruch 15.

Den Teilnehmern eines Kommunikationsnetzes werden in zunehmenden Maße Telekommunikations-Dienste angeboten, beispielsweise der Dienst "Service 130". Die Erfindung geht nun von einer Bereitestellung solcher Telekommunikations-Dienste mittels der IN-Architektur (IN = Intelligent Network) aus.

Diese Art der Bereitstellung wird beispielsweise in dem Artikel "Produkte für intelligente Netze", Elektrisches Nachrichtenwesen, Band 63, Nummer 4, 1989, von J. P. Euzen et al. auf den Seiten 321 bis 330 beschrieben.

Ein Kommunikationsnetz enthält mehrere Dienstvermittlungsknoten, die über ein Nr. 7 Signalisierungsnetz mit mehreren Dienststeuerpunkten verbunden sind. Die Dienstelogika, die die Erbringung von Diensten steuern, sind zentral in den Dienststeuerpunkten angesiedelt. Fordert ein Teilnehmer einen Dienst an, so wählt er eine Dienstkennung. Eine Verbindungsanforderung mit der Dienstkennung wird zu einem der Dienststeuerpunkte geleitet, der die Dienstkennung erkennt und eine Nachricht zu dem entsprechenden Dienststeuerpunkt sendet. Dort wird die der Dienstkennung entsprechende Dienstlogik aktiviert. Der Dienst wird im Folgenden dadurch erbracht, daß die Dienstlogik die Verbindungssteuerung in dem Dienstvermittlungsknoten beeinflußt oder das Senden von Nachrichten an das anfordernde Endgerät durch den Dienstvermittlungsknoten veranlaßt.

Bei dieser Art der Erbringung von Telekommunikations-Diensten steht endgeräteseitig nur ein üblicher Fernsprecher als Bedienungs-Schnittstelle zum Teilnehmer zur Verfügung. Auch wird von den Dienstelogika nur ein solcher üblicher Fernsprecher unterstützt. Dadurch werden die Möglichkeiten der Gestaltung der Bedienungs-Schnittstelle und die Freiheit beim Entwickeln neuer Dienste eingeschränkt.

Ergänzung zur Beschreibungseinleitung, auf Seite 2 der Beschreibung zwischen zweiten und dritten Absatz einzufügen.

In US 5379383 wird ebenfalls die Erbringung eines Telekommunikationsdienstes mittels einer IN Architektur beschrieben.

In WO 95 08881 A wird weiter ein breitbandiges ATM Kommunikationsnetz offenbart, in dem auf eine Anforderung Programme, beispielsweise Video-Spiele oder Textverarbeitungsprogramme, oder Daten, beispielsweise Videofilme, von einer Netzwerk-Einheit zu einem anfordernden Teilnehmer heruntergeladen werden.

Eine Steuereinheit des Kommunikationsnetzes erkennt Anforderungen von Teilnehmern, ein Programm Modul oder Daten von dem Kommunikationsnetz in ein Endgerät des Teilnehmers zu laden. Diese Steuereinheit bestimmt sodann diejenige Netzwerk-Einheit, auf der das angeforderte Programm bzw. die angeforderten Daten abgespeichert sind und veranlaßt den Aufbau einer Kommunikationsverbindung zwischen dieser Netzwerk-Einheit und dem Endgerät des Teilnehmers. Anschließend werden die angeforderten Daten oder Programme über diese Verbindung in das Endgerät geladen.

Der Erfindung liegt nun die Aufgabe zugrunde, die Einführung von bedienungsfreundlicheren oder komplexeren Telekommunikations-Diensten zu erleichtern.

Diese Aufgabe wird gelöst durch ein Verfahren zum Erbringen eines Telekommunikations-Dienstes nach der Lehre von Anspruch 1 sowie durch eine Dienst-Einheit und einen Dienstrechner für ein Kommunikationsnetz, ein Endgerät zum Anschluß an ein Kommunikationsnetz und ein Kommunikationsnetz nach der Lehre von Anspruch 10, 13, 14 bzw. 15.

Der Grundgedanke der Erfindung ist, daß nach der Aktivierung eines Telekommunikations-Dienstes ein dienstspezifisches Steuerprogramm in das Endgerät des Teilnehmers geladen wird. Der Dienst wird sodann durch die Zusammenarbeit einer Dienstelogik des Kommunikationsnetzes mit diesem dienstspezifischen Steuerprogramm im Endgerät erbracht. Das Steuerprogramm unterstützt die Dienstelogik bei der Erbringung des Dienstes.

Durch das dienstspezifische Steuerprogramm, das auf den Ablauf im Endgerät des Teilnehmers Einfluß nimmt, steht ein weiterer Freiheitsgrad für die Entwicklung von Telekommunikations-Diensten zur Verfügung. Weiter erfolgt die Steuerung des Endgerätes diensteindividuell, der Teilnehmer verfügt somit über ein diensteindividuelles Endgerät und damit über eine diensteindividuelle Bedienungs-Schnittstelle. Diese Vorteile werden hierbei erreicht, ohne daß die Logik des Endgerätes überfrachtet wird und ohne daß spezielle Endgeräte für spezielle Dienste notwendig sind. Ein einfaches und in großen Stückzahlen günstig herstellbares standartisiertes Endgerät kann eine diensteindividuelle Bedienungs-Schnittstelle für eine Vielzahl von Telekommunikations-Diensten bilden. Durch diese Flexibilisierung der Endgeräte wird auch eine Beschleunigung der Einführung neuer Telekommunikations-Dienste ermöglicht.

Vorteilhafte Ausgestaltungen der Erfindung sind den Unteransprüchen zu entnehmen.

Hierbei ist es insbesondere vorteilhaft, zur Realisierung dieses neuartigen Konzepts der Diensterbringung Mechanismen der IN-Architektur zu verwenden. Dadurch wird eine einfache Realisierung des Konzepts ohne tiefe Eingriffe in die bestehende Telekommunikations-Infrastruktur möglich.

Im Folgenden wird die Erfindung anhand zweier Ausführungsbeispiele unter zuhilfenahme beiliegender Zeichnungen beispielhaft erläutert.
- Fig. 1: zeigt eine symbolische Darstellung einer Kommunikationsumgebung mit einer erfindungsgemäßen Dienst-Einheit.
- Fig. 2: zeigt eine symbolische Darstellung eines Ausschnitts aus der Kommunikationsumgebung nach Fig. 1.
- Fig. 3: zeigt ein detailiertes Blockschaltbild des Ausschnittes nach Fig. 2.

Im ersten Ausführungsbeispiel wird die Erbringung von Telekommunikations-Diensten gemäß des erfindungsgemäßen Verfahrens in einer Kommunikationsumgebung beschrieben, in der erfindungsgemäße Endgeräte mit einer erfindungsgemäßen Dienst-Einheit zusammenwirken, deren Struktur an die IN-Architektur angelehnt ist und die über einen erfindungsgemäßen Dienstrechner verfügt.

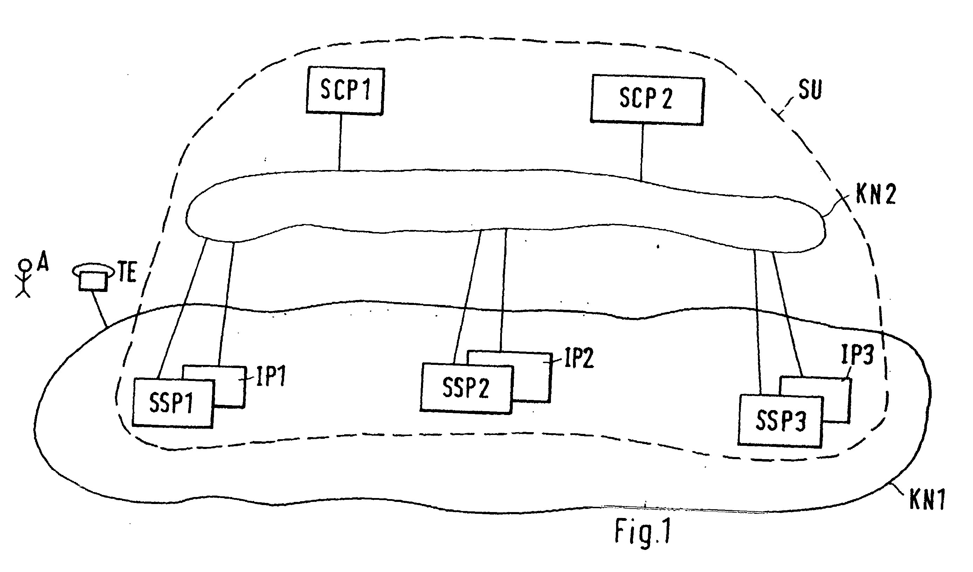

Fig. 1 zeigt ein Kommunikationsnetz KN1, eine Dienst-Einheit SU und ein Endgerät TE, das einem Teilnehmer A zugeordnet ist.

Bei dem Endgerät TE handelt es sich um ein speziell ausgestaltetes Fernsprechendgerät. Die Diensteinheit SU erbringt Telekommunikations-Dienste, die vom Endgerät TE über das Kommunikationsnetz KN1 angefordert werden.

Die Dienst-Einheit SU wird von mehreren Dienstvermittlungstellen SSP1 bis SSP3, mehreren Dienstunterstützungssystemen IP1 bis IP3 einem Kommunikationsnetz KN2 und mehreren Dienststeuereinheiten SCP1 und SCP2 gebildet. Die Dienstvermittlungsstellen SSP1 bis SSP3 und die Dienstunterstützungssysteme IP1 bis IP3 sind über das Kommunikationsnetz KN2 mit den Dienststeuereinheiten SCP1 und SCP2 verbunden.

Das Kommunikationsnetz KN1 ist wie ein übliches Fernsprechnetz ausgestaltet und enthält so auch mehrere Vermittlungsstellen. Von diesen Vermittlungsstellen sind die in Fig. 1 gezeigten Dienstvermittlungsstellen SSP1 bis SSP3 besonders ausgestaltet. Sie übermittlen beim Auftreten von Verbindungsanforderungen mit bestimmten Dienstkennungen als Rufnummer des gerufenen Teilnehmers über das Kommunikationsnetz KN2 Anfragen an die Dienststeuereinheiten SCP1 oder SCP2. Auf diese Anfragen erhalten sie Anweisungen, die die weitere Behandlung der Verbindungsanforderung betreffen.

Es ist auch möglich, daß das Kommunikationsnetz KN1 aus mehreren untereinander verbundenen Unternetzen gebildet wird. Solche Unternetze können beispielsweise öffentliche Netze unterschiedlicher Netzbetreiber, private Netze oder Mobilfunknetze sein.

Die Dienstunterstützungssysteme IP1 bis IP3 sind den Dienstvermittlungsstellen SSP1, SSP2 bzw SSP3 zugeordnet und unterstützen diese bei der Erbringung von Telekommunikations-Diensten, insbesondere bei der Kommunikation mit den Endgeräten des Kommunikationsnetzes KN1. Hierzu verfügen sie über Nutzkanal- und Zeichengabe-Schnittstellen zu den Dienstvermittlungsstellen SSP1 bis SSP3. Sie werden durch die Dienststeuereinheiten SCP1 und SCP2 direkt oder indirekt über die jeweilige der Dienstvermittlungsstellen SSP1 bis SSP3 gesteuert.

Es ist auch möglich, daß ein Dienstunterstützungsystem mehreren Dienstvermittlungsstellen zugeordnet ist. Weiter ist es möglich, daß die Funktion der Dienstunterstützungssysteme IP1 bis IP3 in die Dienstvermittlungsstellen SSP1 bis SSP3 integriert ist.

Bei dem Kommunikationsnetz KN2 handelt es sich um ein Zeichengabenetz nach CCITT Nr. 7. Für das Kommunikationsnetz KN2 können auch beliebige andere Datennetze verwendet werden, beispielsweise X.25 Paketnetze.

Die Dienststeuereinheiten SCP1 und SCP2 stellen jeweils einen Dienstrechner dar, der der Erbringung einer oder mehrerer Telekommunikations-Dienste dient. Sie bestehen jeweils aus einem oder aus mehreren miteinander verbundenen Rechnern und peripheren Komponenten, die insbesondere eine Datenkommunikation über das Kommunikationsnetz KN2 ermöglichen. Auf dieser Hardware-Platform laufen Steuerprogramme ab, die die Funktion eines Dienststeuerpunktes erbringen und somit insbesondere die Erbringung von einem oder von mehreren Telekommunikations-Diensten steuern.

Es ist auch möglich, daß die Dienst-Einheit SU nur von einer Dienstvermittlungsstelle und von einer Dienststeuereinheit gebildet wird.

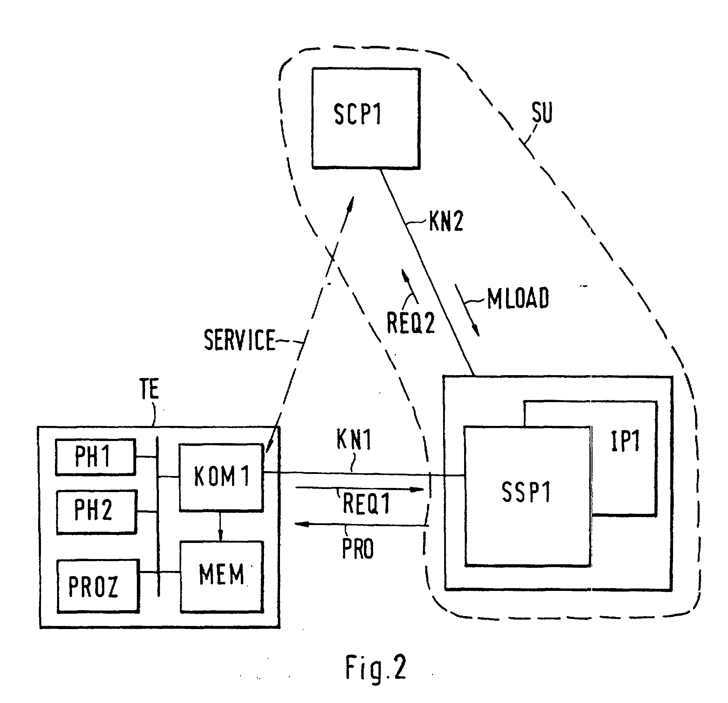

Anhand von Fig. 2 wird nun der Ablauf des erfindungsgemäßen Verfahrens sowie der detailierte Aufbau des Endgerätes TE erläutert.

Fig. 2 zeigt das Endgerät TE und einen Ausschnitt aus der Dienst-Einheit SU mit der Dienstvermittlungsstelle SSP1, dem zugeordneten Dienstunterstützungssystem IP1 und der Dienststeuereinheit SCP1.

Um einen von der Dienst-Einheit SU im Kommunikationsnetz KN1 angebotenen Telekommunikations-Dienst anzufordern, wählt der Teilnehmer A mit seinem Endgerät TE die Dienstkennung dieses Dienstes. Eine Verbindungs-Anforderung REQ1 mit dieser Dienstkennung als Rufnummer wird durch das Kommunikationsnetz KN1 geleitet und beispielsweise von der Dienstvermittlungsstelle SSP1 als Dienst-Anforderung erkannt. Die Dienstvermittlungstelle SSP1 sendet sodann über das Kommunikationsnetz KN2 eine Nachricht REQ2 an diejenige Dienststeuereinheiten, die für die Erbringung des in der Verbindungsanforderung spezifizierten Dienstes zuständig ist.

Die Anforderung eines Dienstes der Dienst-Einheit SU kann auch auf andere Weise Erfolgen. Beispielsweise können die Verbindungsanforderungen des Teilnehmers A generell aufgrund der Teilnehmerkennung zu einer Dienstvermittlungstelle geleitet werden und dort automatisch einen bestimmten Dienst antriggern. Die Anforderung eines Dienstes kann auch auf andere Weise als durch eine spezielle Rufnummer signalisiert werden. Beispielsweise kann durch das Drücken einer speziellen Taste am Endgerät TE eine spezielle Signalisierungsnachricht gesendet werden, die dann von der Dienstvermittlungsstelle SSP1 als Dienst-Anforderung erkannt wird.

Weiter ist es möglich, daß die Verbindungsanforderung von einer Dienstvermittlungsstelle, die über kein Dienstunterstützungssystem verfügt zu solch einer Dienstvermittlungsstelle weitergeleitet wird, die über eines verfügt.

Beim Empfang der Nachricht REQ2 wird in dieser Dienststeuereinheit, beispielsweise der Dienststeuereinheit SCP1, die diesem Dienst zugeordnete Dienstelogik aktivert. Daneben wird von der Dienststeuereinheit SCP1 eine Nachricht MLOAD an das Dienstunterstützungssystem IP1 gesendet, das daraufhin ein dem angeforderten Dienst zugeordnetes Steuerprogramm PRO in das anfordernde Endgerät TE läd. Der Dienst wird im Folgenden durch Zusammenarbeit des Steuerprogramms PRO in dem Endgerät TE und der Dienstelogik in der Dienststeuereinheit SCP1 erbracht. Hierfür werden Steuernachrichten SERVICE zwischen ihnen ausgetauscht. Nach der Erbringung des Dienstes wird das Steuerprogramm wieder aus dem Endgerät TE gelöscht.

Das Endgerät TE weist eine Kommunikationseinheit KOM1, eine Speichereinheit MEM, mehrere pheriphere Komponenten PH1 und PH2 und einen Prozessor PROZ auf, die untereinander über ein Kommunikationsmedium, beispielsweise einen Bus, miteinander verbunden sind.

Die Kommunikationseinheit KOM1 stellt die Schnittstelle zum Kommunikationsnetz KN1 bereit. Je nachdem, ob das Endgerät über einen analogen oder einen ISDN-Teilnehmeranschluß (ISDN = Integrated Services Digital Network) an das Kommunikationsnetz angeschlossen ist, besteht die Kommunikationseinheit KOM1 somit aus unterschiedlichen hard- und softwaremäßigen Baugruppen, die eine Kommunikation über den Nutzkanal und eine Abwicklung des Signalisierungsprotokolls ermöglichen.

Bei der Speichereinheit MEM handelt es sich um einen beschreibaren Speicher, beispielsweise um einen Speicherchip (RAM, EPROM) oder um ein Festplattenlaufwerk.

Die pheripheren Komponenten PH1 und PH2 dienen der Ein- und Ausgabe von Daten vom bzw. zum Teilnehmer A. Bei diesen Komponenten handelt es sich um Eingabemittel, beispielsweise um eine Tastatur, eine Maus,einen Trackball oder ein Mikrophon oder um Ausgabemittel, beispielsweise ein Display, einen Bildschirm oder einen Lautsprecher.

Auf dem Prozessor PROZ laufen in der Speichereinheit MEM gespeicherte Steuerprogramme ab, die die Funktionen und Abläufe des Endgerätes TE bestimmen.

Die ablaufenden Steuerprogramme und die zugrundeliegende Hardware-Plattform des Endgerätes TE bilden zum einen eine Steuereinheit, die die Ein- und Ausgabe von Daten durch die Komponenten PH1 und PH2 und durch die Kommunikationseinheit KOM1 steuert und somit die Funktion des Endgerätes TE bestimmt. Zum anderen bilden sie eine Ladeeinheit, die gemäß eines Lade-Protokolls mit der Dienst-Einheit kommuniziert, den Empfang eines zu ladenden Steuerprogramms, hier des Steurprogramms PRO durch die Kommunikationseinheit KOM1 steuert und das Abspeichern dieses empfangenen Steuerprogramms an einer bestimmten Stelle in der Speichereinheit MEM veranlaßt. Ist das Steuerprogramm vollständig in der Speichereinheit MEM abgespeichert, so wird das Steuerprogramm in den Ablauf der Steuereinheit eingebunden und bestimmt somit die Funktion des Endgerätes TE mit. Es ist hierbei möglich, daß das Steuerprogramm PRO andere in der Speichereinheit MEM abgespeicherten Steuerprogramme für die Durchführung seiner Funktion startet.

Es ist hierbei vorteilhaft, ein einziges standartisiertes Ladeverfahren mit einem standartisierten Ladeprotokoll vorzusehen, gemäß dem beliebige solche Steuerprogramme in bliebige Endgeräte geladen werden.

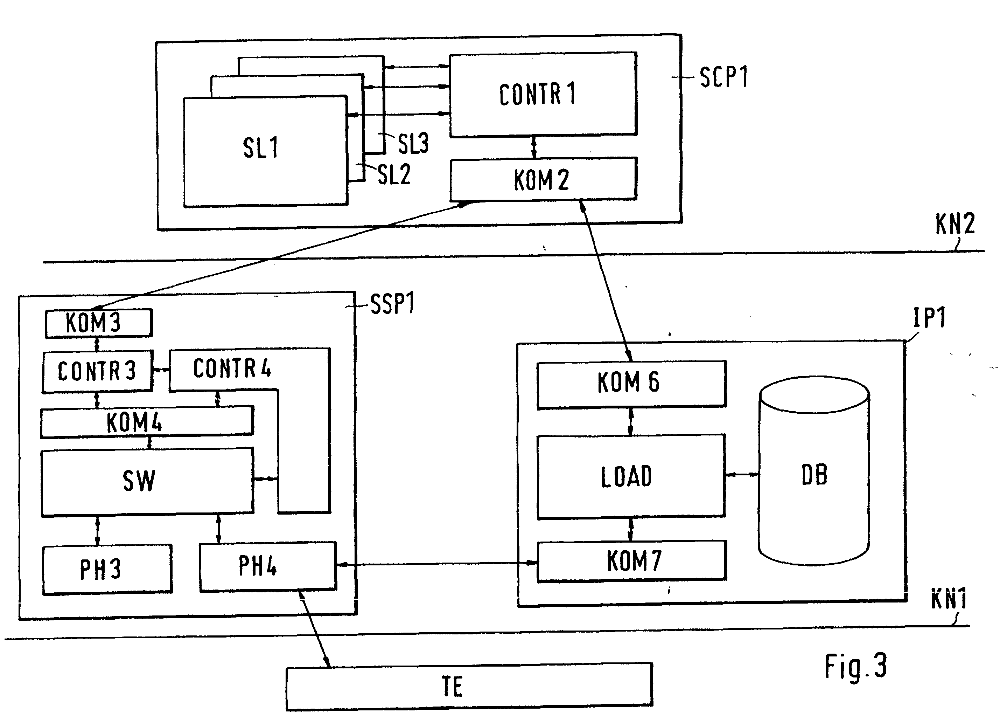

Andhand von Fig. 3 wird nun der detailierte Aufbau der Dienst-Einheit SU beschrieben.

Fig. 3 zeigt die Dienststeuereinheit SCP1, die Dienstvermittlungsstelle SSP1, das Dienstunterstützungssystem IP1 und das Endgerät TE.

Die Dienststeuereinheit SCP1 weist eine Steuereinheit CONTR1, eine Kommunikationseinheit KOM2 und drei Dienstelogika SL1 bis SL3 auf. Die Steuereinheit CONTR1 tauscht Daten mit den Dienstelogika SL1 bis SL3 sowie mit der Kommunikationseinheit KOM2 aus, die ihererseits über das Kommunikationsnetz KN2 Daten austauscht.

Die Kommunikationseinrichtung KOM2 stellt die für den Austausch von Nachrichten mit den Dienstvermittlungsstellen SSP1 bis SSP3 und den Dienstunterstützungssystemen IP1 bis IP3 über das Kommunikationsnetz KN2 notwendigen Kommunikationsdienste zur Verfügung. Diese Kommunikation basiert auf einem Signalisierungsnetz nach dem Protokoll Nr. 7 der CCITT, auf dem das INAP-Protokoll (INAP = Intelligent Network Applikation Protokoll) aufsetzt.

Die Steuereinheit CONTR1 ist für die generelle Ablaufsteuerung in der Dienststeuereinheit SCP1 verantwortlich. Auf den Empfang einer Anforderungsnachricht, hier der Anforderungsnachricht REQ2 aktiviert sie die dieser Anforderung entsprechende Dienste logik der Dienstelogika SL1 bis SL3, hier die Dienstelogik SL1. Zur Aktivierung startet sie das der Dienstelogik zugeordnete Dienste-Programm. Weiter veranlaßt sie das Senden einer Lade-Nachricht an das Dienstunterstützungssystem IP1, hier die Nachricht MLOAD, die das Laden des dieser Dienstelogik zugeordneten Steuerprogramms, hier des Steuerprogramms PRO, in das Endgerät TE veranlaßt.

Es ist auch möglich, daß die Dienststeureinheit SCP1 eine andere Anzahl von Dienstelogika aufweist oder daß nicht alle den Dienstelogika zugeordneten Telekommunikations-Dienste gemäß dem erfindungsgemäßen Verfahren erbracht werden. Im letzten Fall würde bei der Aktivierung solcher Dienstelogika nicht das Laden eines Steuerprogramms in das anfordernde Endgerät veranlaßt werden. Das Senden der Lade-Nachricht kann auch von der aktivierten Dienstelogik veranlaßt werden. Es ist weiter möglich, daß vor dem Senden der Lade-Nachricht überprüft wird, ob das anfordernde Endgerät für den Ablauf des Steuerprogramms entsprechend ausgestaltet ist. Trifft dies zu, so wird das Steuerprogramm PRO in das Endgerät geladen. Trifft dies nicht zu, so wird das Steuerprogramm nicht geladen und der angeforderte Telekommunikations-Dienst in einer vereinfachten Version ohne die Zusammenarbeit mit dem Steuerprogramm PRO allein von der aktivierten Dienstelogik erbracht.

Die Dienstelogika SL1 bis SL3 stellen jeweils die für die Steuerung eines bestimmten Telekommunikations-Dienstes notwendigen Funktionen zur Verfügung. Sie werden jeweils von einem Dienst-Programm und diesem Dienst-Programm zugeordneten Daten gebildet. Nach Aktivierung durch die Steuereinheit CONTR1 erbringen die Dienstelogika SL1 bis SL3 jeweils einen Telekommunikations-Dienst, indem sie durch den Austausch von Steuernachrichten mit der Dienstvermittlungsstelle SSP1 und mit dem Dienstunterstützungssystem IP1 die weitere Bearbeitung einer Verbindungsanforderung bestimmen sowie den Austausch von Nachrichten mit dem Endgerät TE steuern. Durch diesen Austausch von Nachrichten kommuniziert eine aktivierte Dienstelogik gemäß eines entsprechenden Kontroll-Protokolls mit derjenigen Steuereinheit in dem Endgerät TE, deren Ablauf von dem Steuerprogramm PRO bestimmt wird,. Der Telekommunkations-Dienst, der beispielsweis der Dienstelogik SL1 zugeordnet ist, wird so durch die Zusammenarbeit der Dienstelogik SL1 mit dem ablaufenden Steuerprogramm PRO erbracht, das die Funktionen des Endgerätes TE steuert.

Die Dienstvermittlungsstelle SSP1 weist zwei Kommunikationseinheiten KOM3 und KOM4, zwei Steuereinheiten CONTR3 und CONTR4, ein Koppelnetz SW und zwei Ansschlußeinheiten PH3 und PH4 auf.

Die Anschlußeinheiten PH3 und PH4 sowie die Kommunikationseinheit KOM4 tauschen über das Koppelnetz SW Daten aus. Die Steuereinheit CONTR4 empfängt Signalisierungsdaten von der Kommunikationseinheit KOM4 und tauscht Steuerdaten mit dem Koppelnetz SW und der Steuereinheit CONTR3 aus, die ihrerseits Signalisierungsdaten von der Kommunikationseinheit KOM4 empfängt und Daten über die Kommunikationseinheit KOM3 und das Kommunikationsnetz KN2 austauscht.

Die Anschlußeinheiten PH3 und PH4 stellen den Teilnehmeranschluß für Teilnehmer des Kommunikationsnetzes KN1 und Anschlüsse für Querleitungsbündel zu anderen Vermittlungsstellen bereit. Weiter stellt die Anschlußeinheit PH4 einen Anschluß für mindestens einem Nutz- und Signalisierungskanal bereit, der mit dem Dienstunterstützungssystem IP1 verbunden ist.

Die Kommunikationseinheit KOM4 dient dem Empfang von Signalisierungsnachrichten, die den Auf- und Abbau von Verbindungen sowie dem Anfordern von Diensten dienen. Die Kommunikationseinheit KOM3 entspricht der Kommunikationseinheit KOM2.

Die Steuereinheit CONTR4 führt die üblichen Funktionen einer Steuerung einer Vermittlungsstelle durch und steuert somit u. a. auch das Koppelnetz SW.

Die Steuereinheit CONTR3 basiert auf derselben hard- und softwaremäßigen Plattform, auf der die Steuereinheit CONTR4 basiert und greift in die Verbindungssteuerung ein, deren Ablauf von der Steuereinheit CONTR4 gesteuert wird. Die Steuereinheit erkennt die Signalisierung einer Dienstanforderung, beispielsweise das Signalisieren einer Verbindungsanforderung mit einer Dienstkennung als Rufnummer. Durch die Eingriffsmöglichkeit in die Verbindungssteuerung ist es der Steuereinheit CONTR3 möglich, die weitere Bearbeitung einer Verbindungsanforderung gemäß von der Dienststeuereinheit gesendeten Steuernachrichten zu steuern. Weiter ist es ihr möglich, gemäß solchen Steuerbefehlen mittels der Kommunikationseinheit KOM4 Nachrichten über einen Signalisierungskanal mit dem anfordernden Endgerät TE auszutauschen. Es ist auch möglich, daß sie bei entsprechender Ausgestaltung der Kommunikationseinheit KOM4 Nachrichten über einen Nutzkanal mit dem Endgerät TE austauscht.

Das Dienstunterstützungssystem IP1 weist zwei Kommunikationseinheiten KOM6 und KOM7, eine Ladeeinheit LOAD und eine Datenbank DB auf.

Die Kommunikationseinheit KOM6 entspricht der Kommunikationseinheit KOM2. Die Kommunikationseinheit KOM7 stellt die notwendigen Funktionsgruppen bereit, um Daten mit dem Endgerät TE über einen Nutzkanal auszutauschen. Verfügt das Endgerät TE lediglich über einen analogen Anschluß an das Kommunikationsnetz KN1, so verfügt die Kommunikationseinheit über ein Modem, um die notwendige Kodierung für die Datenübertragung durchzuführen. Es ist auch möglich, daß die Kommunikationseinheit KOM7 zusätzlich oder ersatzweise über Baugruppen verfügt, die einen solchen Datenaustausch über einen Signalisierungskanal, beispielsweise dem D-Kanal im ISDN ermöglichen.

In der Datenbank DB sind mehrere Steuerprogramme abgespeichert, die unterschiedlichen Telekommunikations-Diensten zugeordnet sind. Es ist auch möglich, daß die Datenbank DB nicht in dem Dienstunterstützungssystem angeordnet ist, sondern daß es sich um eine zentrale Datenbank handelt, auf die mehrere Dienstunterstützungssysteme zugreifen.

Die Ladeeinheit LOAD steuert das Laden von in der Datenbank DB abgespeicherten Steuerprogrammen in Endgeräte des Kommunikationsnetzes KN1. Hierfür kommuniziert sie gemäß des Lade-Protokolls über die Kommunikationseinheit KOM7 mit der Ladeeinheit im Endgerät TE. Für dies Kommunikation wird von der Steuereinheit CONTR3 oder direkt von der Ladeeinheit LOAD im Kommunikationsnetz KN1 ein Nutzkanal zwischen dem Endgerät TE und dem Dienstunterstützungssystem über die Vermittlungsstelle SSP1 aufgebaut. Im laufe dieser Kommunikations sendet die Ladeeinheit LOAD das Steuerprogramm als Datensatz in Form von einem oder von mehreren Datenpakten and die Ladeeinheit in dem Endgerät TE.

Es ist auch möglich, daß diese Datenpakte über ein Signalisierungsnetz zum Endgerät TE übertragen werden und somit nicht der Aufbau eines Nutzkanals notwendig wird.

In einem zweiten Ausführungsbeispiel wird die Durchführung des erfindungsgemäßen Verfahrens in einer Kommunikationsumgebung erläutert, in dem die erfindungsgemäße Dienst-Einheit eine einzige Vermittlungsstelle ist.

Bei dieser Vermittlungsstelle handelt es sich um eine Nebenstellen-Vermittlungsstelle, eine Centrex-Vermittlungsstelle oder eine normale Vermittlungsstelle, die mit zusätzlichen Funktionen zur Erbringungung-von Telekommunikations-Diensten für beliebige Teilnehmer ausgestattet ist. Diese Vermittlungsstelle ist wie die Vermittlungsstelle SSP1 ausgestaltet, mit dem Unterschied, daß die Kommunikationseinheit KOM3 entfält und zusätzlich Funktionsgruppen vorhanden sind, die den Dienstelogika SL1 bis SL3, der Datenbank DB, der Ladeeinheit LOAD und der Steuereinheit CONTR1 entsprechend. Diese Funktionsgruppen wirken analog zu Fig. 3 zusammen.

## Patentansprüche

1. Verfahren zum Erbringen eines Telekommunikations-Dienstes, bei dem zum Anfordern des Dienstes eine Dienst-Anforderung (REQ1) von einem Endgerät (TE) an eine Dienst-Einheit (SU) eines Kommunikationsnetzes (KN1) gesendet wird und bei dem auf den Empfang der Dienst-Anforderung (REQ1) eine dienstspezifische Dienstelogik (SL1) der Dienst-Einheit (SU) aktiviert wird,
**dadurch gekennzeichnet, daß** auf den Empfang der Dienst-Anforderung (REQ1) ein dienstspezifisches die Dienstelogik bei der Erbringung des Dienstes unterstützendes Steuerprogramm (PRO) von der Dienst-Einheit (SU) in das anfordernde Endgerät (TE) geladen wird, daß für die Erbringung des Dienstes die dienstspezifische Dienstelogik (SL1) in der Dienst-Einheit (SU) mit dem dienstspezifischen Steuerprogramm (PRO) in dem Endgerät (TE) zusammenarbeitet und daß für diese Zusammenarbeit zur Erbringung des Dienstes Steuernachrichten (SERVICE) zwischen dem dienstspezifischen Steuerprogramm (PRO) in dem Endgerät (TE) und der dienstspezifischen Dienstelogik (SL1) in der Dienst-Einheit (SU) ausgetauscht werden.

2. Verfahren nach Anspruch 1, **dadurch gekennzeichnet, daß** das Steuerprogramm (PRO) nach Erbringen des Dienstes im Endgerät (TE) gelöscht wird.

3. Verfahren nach Anspruch 1, **dadurch gekennzeichnet, daß** das Steuerprogramm (PRO) mittels eines standartisierten Ladeverfahrens von der Dienst-Einheit (SU) in das anfordernde Endgerät (TE) geladen wird.

4. Verfahren nach Anspruch 1, **dadurch gekennzeichnet, daß** als Dienst-Anforderung (REQ1) das Signalisieren einer Verbindungsanforderung mit einer Dienstkennung als Rufnummer des gerufenen Teilnehmers erkannt wird.

5. Verfahren nach Anspruch 1, **dadurch gekennzeichnet, daß** die Dienst-Anforderung (REQ1) von einer Dienstvermittlungsstelle (SSP1 bis SSP3) des Kommunikationsnetzes (KN1) erkannt wird, die daraufhin die Dienstelogik (SL1) in einer zentralen Dienststeuereinheit (SCP1) aktiviert.

6. Verfahren nach Anspruch 5, **dadurch gekennzeichnet, daß** das dienstsspezifische Steuerprogramm (PRO) in einem der Dienstvermittlungsstelle (SSP1 bis SSP3) zugeordneten Dienstunterstützungssystem (IP1 bis IP3) abgespeichert wird und von diesem Dienstunterstützungssystem (IP1 bis IP3) auf den Empfang der Dienst-Anforderung (REQ1) in das anfordernde Endgerät (TE) geladen wird.

7. Verfahren nach Anspruch 6, **dadurch gekennzeichnet, daß** eine Vielzahl von unterschiedlichen Diensten zugeordneten dienstspezifischen Steuerprogrammen in dem Dienstunterstützungssystem (IP1 bis IP3) abgespeichert ist.

8. Verfahren nach Anspruch 1, **dadurch gekennzeichnet, daß** zum Laden des Steuerprogramms (PRO) ein Nutzkanal zwischen dem Endgerät (TE) und der Dienst-Einheit (SU) aufgebaut wird.

9. Verfahren nach Anspruch 1, **dadurch gekennzeichnet, daß** das Steuerprogramm zum Laden über einen Signalisierungskanal übertragen wird.

10. Dienst-Einheit (SU) für ein Kommunikationsnetz (KN1) mit mindestens einer dem Erbringen eines Telekommunikations-Dienstes dienenden Dienstelogik (SL1 bis SL3), mit einer Empfangseinheit (KOM4) zum Empfang einer Dienst-Anforderung (REQ1) von einem einen Telekommunikations-Dienst anfordernden Endgerät (TE) und mit einer Steuereinheit (CONTR1, CONTR3), die so ausgestaltet ist, daß sie auf den Empfang dieser Dienst-Anforderung (REQ1) die Dienstelogik oder eine dienstspezifische der Dienstelogika (SL1) aktiviert,
**dadurch gekennzeichnet, daß** die Dienst-Einheit (SU) eine Datenbank (DB) zum Speichern von dienstspezifischen die Dienstelogik bei der Erbringung des Dienstes unterstützendes Steuerprogrammen und eine Ladeeinheit (LOAD) aufweist, die so ausgestaltet ist, daß sie auf den Empfang der Dienst-Anforderung (REQ1) ein dienstspezifisches Steuerprogramm (PRO) aus der Datenbank (DB) in das anfordernde Endgerät (TE) lädt, und daß die aktivierte Dienstelogik (SL1) so ausgestaltet ist, daß sie für die Erbringung des Dienstes mit dem dienstspezifischen Steuerprogramm (PRO) in dem Endgerät (TE) zusammenarbeitet und daß sie für diese Zusammenarbeit zur Erbringung des Dienstes Steuernachrichten (SERVICE) mit dem dienstspezifischen Steuerprogramm (PRO) in dem Endgerät (TE) austauscht.

11. Dienst-Einheit nach Anspruch 10, **dadurch gekennzeichnet, daß** die Dienst-Einheit eine Vermittlungsstelle des Kommunikationsnetzes ist.

12. Dienst-Einheit nach Anspruch 10, **dadurch gekennzeichnet, daß** die Diensteinheit (SU) zwei oder mehr Dienstvermittlungsstellen (SSP1 bis SSP3) und mindestens eine zentrale Dienststeuereinrichtung (SCP1, SCP2) umfaßt.

13. Dienstrechner (SCP1) für ein Kommunikationsnetz (KN1) mit mindestens einer dem Erbringen eines Telekommunikations-Dienstes dienenden Dienstelogik (SL1 bis SL3) und mit einer Steuereinheit (CONTR1), die so ausgestaltet ist, daß sie auf den Empfang einer Dienst-Anforderung (REQ1) von einem einen Telekommunikations-Dienst anfordernden Endgerät (TE) die Dienstelogik oder eine dienstspezifische der Dienstelogika (SL1) aktiviert,
**dadurch gekennzeichnet, daß** die Steuereinheit (CONTR1) so ausgestaltet ist, daß sie auf den Empfang der Dienst-Anforderung (REQ1) das Laden eines dienstspezifischen die Dienstelogik bei der Erbringung des Dienstes unterstützendes Steuerprogramms (PRO) in das anfordernde Endgerät (TE) veranlaßt, und daß die aktivierte Dienstelogik (SL1) so ausgestaltet ist, daß sie für die Erbringung des Dienstes mit dem dienstspezifischen Steuerprogramm (PRO) in dem Endgerät (TE) zusammenarbeitet und daß sie für diese Zusammenarbeit zur Erbringung des Dienstes Steuernachrichten (SERVICE) mit dem dienstspezifischen Steuerprogramm (PRO) in dem Endgeröt (TE) austauscht.

14. Endgerät (TE) zum Anschluß an ein Kommunikationsnetz (KN1),
**dadurch gekennzeichnet, daß** das Endgerät (TE) mit einer Speichereinheit (MEM) zum Speichern eines dienstspezifischen eine Dienstelogik bei der Erbringung des Dienstes unterstützend Steuerprogramms (PRO), mit einer Ladeeinheit zum Laden des dienstspezifischen Steuerprogramms (PRO) von einer Dienst-Einheit (SU) des Kommunikationsnetzes (KN1) in die Speichereinheit (MEM) und mit einer Steuereinheit versehen ist, die so ausgestaltet ist, daß sie gemäß dem geladenen dienstspezifischen Steuerprogramm (PRO) mit einer dienstspezifischen Dienstelogik (SL1) der Dienst-Einheit (SU) zum Erbringen eines Telekommunikations-Dienstes zusammenarbeitet und für diese Zusammenarbeit zur Erbringung des Dienstes Steuernachrichten (SERVICE) mit der dienstspezifischen Dienstelogik (SL1) in der Dienst-Einheit (SU) austauscht.

15. Kommunikationsnetz (KN1) das so ausgestaltet ist, daß Telekommmunikations-Dienste gemäß dem Verfahren nach Anspruch 1 erbracht werden.

## Claims

1. A method of providing a telecommunications service, wherein in order to request the service, a service request (REQ1) is sent from a terminal (TE) to a service unit (SU) of a communications network (KN1), and wherein upon the reception of the service request (REQ1) a service-specific service logic (SL1) of the service unit (SU) is activated, **characterised in that** upon the reception of the service request (REQ1), a service-specific control program (PRO), which supports the service logic in the provision of the service, is loaded from the service unit (SU) into the requesting terminal (TE), that for the provision of the service the service-specific service logic (SL1) in the service unit (SU) cooperates with the service-specific control program (PRO) in the terminal (TE), and that for this cooperation for the provision of the service, control messages (SERVICE) are exchanged between the service-specific control program (PRO) in the terminal (TE) and the service-specific service logic (SL1) in the service unit (SU).

2. A method according to Claim 1, **characterised in that** after provision of the service, the control program (PRO) in the terminal (TE) is deleted.

3. A method according to Claim 1, **characterised in that** the control program (PRO) is loaded from the service unit (SU) into the requesting terminal (TE) using a standardized loading method.

4. A method according to Claim 1, **characterised in that** the signalling of a connection request comprising a service identification code representing the called subscriber's number is detected as the service request (REQ1).

5. A method according to Claim 1, **characterised in that** the service request (REQ1) is detected by a service switching centre (SSP1 to SSP3) of the communications network (KN1) which then activates the service logic (SL1) in a central service control unit (SCP1).

6. A method according to Claim 5, **characterised in that** the service-specific control program (PRO) is stored in a service support system (IP1 to IP3) associated with the service switching centre (SSP1 to SSP3), and upon the reception of the service request (REQ1) is loaded by this support system (IP1 to IP3) into the requesting terminal (TE).

7. A method according to Claim 6, **characterised in that** a plurality of service-specific control programs assigned to different services are stored in the service support system (IP1 to IP3).

8. A method according to Claim 1, **characterised in that** for the loading of the control program (PRO) a bearer channel is established between the terminal (TE) and the service unit (SU).

9. A method according to Claim 1, **characterised in that** for the loading the control program is transferred over a signalling channel.

10. A service unit (SU) for a communications network (KN1) comprising at least one service logic (SL1 to SL3) serving to provide a telecommunications service, a receiving unit (KOM4) for receiving a service request (REQ1) from a terminal (TE) requesting a telecommunications service, and a control unit (CONTR1, CONTR3) designed to activate the service logic or a service-specific one (SL1) of the service logics upon the reception of this service request (REQ1), **characterised in that** the service unit (SU) comprises a database (DB) for storing service-specific control programs which support the service logic in the provision of the service, and a load unit (LOAD) which is designed such that upon the reception of the service request (REQ1), it loads a service-specific control program (PRO) from the database (DB) into the requesting terminal (TE), and that the activated service logic (SL1) is designed such that for the provision of the service it cooperates with the service-specific control program (PRO) in the terminal (TE), and that for this cooperation for the provision of the service it exchanges control messages (SERVICE) with the service-specific control program (PRO) in the terminal (TE).

11. A service unit according to Claim 10, **characterised in that** it is a switching centre of the communications network.

12. A service unit according to Claim 10, **characterised in that** the service unit (SU) comprises two or more service switching centres (SSP1 to SSP3) and at least one central service control unit (SCP1, SCP2).

13. A service computer (SCP1) for a communications network (KN1) with at least one service logic (SL1 to SL3) serving to provide a telecommunications service, and with a control unit (CONTR1) which is designed such that upon the reception of a service request (REQ1) from a terminal (TE) requesting a telecommunications service, it activates the service logic or a service-specific one (SL1) of the service logics, **characterised in that** the control unit (CONTR1) is designed such that upon the reception of the service request (REQ1), it instigates the loading of a service-specific control program (PRO), which supports the service logic in the provision of the service, into the requesting terminal (TE), and that the activated service logic (SL1) is designed such that for the provision of the service it cooperates with the service-specific control program (PRO) in the terminal (TE), and that for this cooperation for the provision of the service, it exchanges control messages (SERVICE) with the service-specific control program (PRO) in the terminal (TE).

14. A terminal (TE) for connection to a communications network (KN1), **characterised in that** the terminal (TE) is provided with a memory unit (MEM) for storing a service-specific control program (PRO), which supports the service logic in the provision of the service, with a load unit for loading the service-specific control program (PRO) from a service unit (SU) of the communications network (KN1) into the memory unit (MEM), and with a control unit designed such that it cooperates, in accordance with the loaded service-specific control program (PRO), with a service-specific service logic (SL1) of the service unit (SU) in providing a telecommunications service and, for this cooperation for the provision of the service, exchanges control messages (SERVICE) with the service-specific service logic (SL1) in the service unit (SU).

15. A communications network (KN1) which is designed such that telecommunications services are provided in accordance with the method according to Claim 1.

## Revendications

1. Procédé destiné à fournir un service de télécommunication, selon lequel pour demander le service, une demande de service (REQ1) est émise par un appareil terminal (TE) vers une unité de service (SU) d'un réseau de communication (KN1), et selon lequel en réponse à la réception de la demande de service (REQ1), une logique de service (SL1) de l'unité de service (SU), spécifique au service, est activée,
**caractérisé en ce qu'**en réponse à la réception de la demande de service (REQ1), un programme de commande (PRO) spécifique au service et assistant la logique de service lors de la fourniture du service, est téléchargé par l'unité de service (SU) dans l'appareil terminal (TE) demandeur, **en ce que** pour la fourniture du service, la logique de service (SL1) spécifique au service dans l'unité de service (SU) interagit avec le programme de commande (PRO) spécifique dans l'appareil terminal (TE), et **en ce que** pour cette interaction destinée à fournir ou exécuter le service, des informations de commande (SERVICE) sont échangées entre le programme de commande (PRO) spécifique au service dans l'appareil terminal (TE) et la logique de service (SL1) spécifique au service dans l'unité de service (SU).

2. Procédé selon la revendication 1, **caractérisé en ce que** le programme de commande (PRO), après la fourniture ou l'exécution du service, est effacé dans l'appareil terminal (TE).

3. Procédé selon la revendication 1, **caractérisé en ce que** le programme de commande (PRO) est téléchargé, au moyen d'un procédé de téléchargement standardisé, par l'unité de service (SU), dans l'appareil terminal (TE) demandeur.

4. Procédé selon la revendication 1, **caractérisé en ce qu'**en guise de demande de service (REQ1), on identifie la signalisation d'une demande de connexion avec un indicatif de service en tant que numéro d'appel de l'abonné appelé.

5. Procédé selon la revendication 1, **caractérisé en ce que** la demande de service (REQ1) est identifiée par un central de service (SSP1 à SSP3) du réseau de communication (KN1) qui, en réponse, active la logique de service (SL1) dans une unité centrale de commande de service (SCP1).

6. Procédé selon la revendication 5, **caractérisé en ce que** le programme de commande (PRO) spécifique au service est mémorisé dans un système d'assistance de service (IP1 à IP3) associé au central de service (SSP1 à SSP3), et est téléchargé par ce système d'assistance de service (IP1 à IP3) dans l'appareil terminal demandeur (TE) en réponse à la réception de la demande de service (REQ1).

7. Procédé selon la revendication 6, **caractérisé en ce qu'**un grand nombre de programmes de commande spécifiques aux services, associés à différents services, sont mémorisés dans le système d'assistance de service (IP1 à IP3).

8. Procédé selon la revendication 1, **caractérisé en ce que** pour télécharger le programme de commande (PRO), on établit un canal utile entre l'appareil terminal (TE) et l'unité de service (SU).

9. Procédé selon la revendication 1, **caractérisé en ce que** le programme de commande, pour son téléchargement, est transmis par l'intermédiaire d'un canal de signalisation.

10. Unité de service (SU) pour un réseau de communication (KN1) comprenant au moins une logique de service (SL1 à SL3) servant à fournir un service de télécommunication, une unité de réception (KOM4) destiné à la réception d'une demande de service (REQ1) émanant d'un appareil terminal (TE) demandeur d'un service de télécommunication, et une unité de commande (CONTR1, CONTR3) conçue de manière telle qu'en réponse à la réception de ladite demande de service (REQ1), elle active la logique de service ou une logique spécifique des logiques de service (SL1),
**caractérisée en ce que** l'unité de service (SU) comprend une banque de données (DB) pour la mémorisation de programmes de commande spécifiques au service et assistant la logique de service lors de la fourniture ou de l'exécution du service, ainsi qu'une unité de téléchargement (LOAD) qui est conçue de manière telle, qu'en réponse à la réception de la demande de service (REQ1), elle télécharge un programme de commande (PRO) spécifique au service de la banque de données (DB) dans l'appareil terminal (TE) demandeur, et **en ce que** la logique de service (SL1) activée est conçue de façon telle, que pour la fourniture ou l'exécution du service, elle interagit avec le programme de commande (PRO) spécifique au service dans l'appareil terminal (TE), et **en ce que** pour cette interaction destinée à fournir ou exécuter le service, elle échange des informations de commande (SERVICE) avec le programme de commande (PRO) spécifique au service dans l'appareil terminal (TE).

11. Unité de service selon la revendication 10, **caractérisée en ce que** l'unité de service est un central du réseau de communication.

12. Unité de service selon la revendication 10, **caractérisée en ce que** l'unité de service (SU) comprend deux centraux de service (SSP1 à SSP3) ou davantage, et au moins un dispositif central de commande de service (SCP1, SCP2).

13. Calculateur de service (SCP1) destiné à un réseau de communication (KN1) comprenant au moins une logique de service (SL1 à SL3) servant à fournir un service de télécommunication, et comprenant également une unité de commande (CONTR1) qui est conçue de manière telle qu'en réponse à la réception d'une demande de service (REQ1) émanant d'un appareil terminal (TE) demandant un service de télécommunication, elle active la logique de service ou une logique spécifique des logiques de service (SL1),
**caractérisé en ce que** l'unité de commande (CONTR1) est conçue de manière telle, qu'en réponse à la réception d'une demande de service (REQ1), elle provoque le téléchargement dans l'appareil terminal demandeur (TE), d'un programme de commande (PRO) spécifique au service et assistant la logique de service lors de la fourniture ou de l'exécution du service, et **en ce que** la logique de service (SL1) activée est conçue de façon telle, que pour la fourniture ou l'exécution du service, elle interagit avec le programme de commande (PRO) spécifique au service dans l'appareil terminal (TE), et **en ce que** pour cette interaction destinée à fournir ou exécuter le service, elle échange des informations de commande (SERVICE) avec le programme de commande (PRO) spécifique au service dans l'appareil terminal (TE).

14. Appareil terminal (TE) destiné au brancheement ou à la connexion à un réseau de communication (KN1),
**caractérisé en ce que** l'appareil terminal (TE) est doté d'une unité de mémoire (MEM) destinée à la mémorisation d'un programme de commande (PRO) spécifique au service et assistant la logique de service lors de la fourniture ou de l'exécution du service, d'une unité de téléchargement destinée à télécharger le programme (PRO) spécifique au service d'une unité de service (SU) du réseau de communication (KN1) dans l'unité de mémoire (MEM), et d'une unité de commande, qui est conçue de manière telle, qu'elle interagisse, conformément au programme de commande (PRO) spécifique au service téléchargé, avec une logique de service (SL1) spécifique au service, de l'unité de service (SU), pour la fourniture ou l'exécution d'un service de télécommunication, et échange pour cette interaction destinée à fournir ou exécuter le service, des informations de commande (SERVICE) avec la logique de service (SL1) spécifique au service, dans l'unité de service (SU).

15. Réseau de communication (KN1) qui est conçu de manière à fournir et exécuter des services de télécommunication selon le procédé de la revendication 1.
